# FASCICULE DE BREVET EUROPEEN

(11) **EP 3 548 441 B1**
(45) Date de publication et mention de la délivrance du brevet: **14.07.2021**
(21) Numéro de dépôt: 17816919.9
(22) Date de dépôt: 23.11.2017
(51) Int. Cl.: C03B 23/03, C03B 23/035

(54) **BOMBAGE DE VERRE MINCE**
BIEGEN VON DÜNNGLAS
BENDING THIN GLASS

(30) Priorité: 30.11.2016 FR 1661720
(43) Date de publication de la demande: 09.10.2019
(73) Titulaire: SAINT-GOBAIN GLASS FRANCE, 92400 Courbevoie (FR)
(72) Inventeur: FREBOURG, Philippe, 60300 Senlis (FR); THELLIER, Hervé, 60170 Pimprez (FR); OLIVIER, Thierry, 60150 Thourotte (FR)
(74) Mandataire: Saint-Gobain Recherche
(86) Numéro de dépôt international: PCT/FR2017/053235
(87) Numéro de publication internationale: WO 2018/100272

(56) Documents cités:
- EP-A1- 2 571 823
- EP-A2- 1 826 186
- WO-A1-2016/156735
- US-A- 5 769 919

## Description

L'invention concerne un dispositif et un procédé pour le bombage de feuilles de verre, notamment de faible épaisseur, notamment d'épaisseur inférieure ou égale à 1,3 mm et même d'épaisseur inférieure ou égale à 1 mm.

Les vitrages feuilletés dont l'une des feuilles de verre est plus mince que les autres, notamment d'épaisseur inférieure ou égale à 1,3 mm, ont donné lieu à d'importants travaux ces dernières années. Une feuille mince présente notamment l'avantage d'être légère et formable à froid, son association dans un vitrage feuilleté aboutissant à un vitrage de bonne qualité. En effet, quand un verre mince est incorporé dans un vitrage feuilleté, le phénomène de bullage périphérique ou de décohésion de l'interface verre/PVB est minimisé. Cet effet bénéfique est d'autant plus important que l'épaisseur du verre utilisé est faible.

Un dispositif de bombage est à régler spécifiquement en fonction de l'épaisseur des feuilles et il est difficile de bomber dans une même campagne de fabrication des feuilles d'épaisseurs différentes. C'est pourquoi, pour un vitrage feuilleté comprenant des feuilles d'épaisseurs différentes, chaque feuille est de préférence bombée individuellement (par opposition au bombage d'un empilement de feuilles) dans une campagne de fabrication spécifique à une épaisseur donnée de feuille.

Différents procédés de bombage du verre sont connus, comme le bombage par gravité sur squelette, ou le bombage par pressage. On a observé que le bombage par gravité de verre mince sur squelette produit des ondulations à la périphérie de la feuille. Le bombage par pressage peut également donner lieu à la formation de plis en périphérie. Le phénomène responsable de la création de plis en périphérie d'une feuille est une instabilité similaire à du flambement (ou du voilement) de plaques élastiques, déjà observé dans le domaine de la résistance des matériaux.

Une manière de réduire la tendance à la formation de plis lors du bombage par pressage est de pincer en premier la périphérie du verre entre un moule et un contremoule puis de procéder au pressage du reste de la feuille. Ce type de pressage, notamment par aspiration contre une forme inférieure pleine de bombage a déjà été proposé dans WO2006072721. Ce procédé est proposé pour le bombage de feuilles empilées par paires et fait intervenir un prébombage par gravité. Dans ce procédé le verre est amené sous une cellule de bombage par un train de supports gravitaires portant chacun un empilement de verre. Le passage du verre d'un charriot au moule inférieur de bombage par aspiration est réalisé par l'intermédiaire d'une forme supérieure aspirante (également appelée « pick-up ») qui prend en charge le verre en le déchargeant du support gravitaire pour le larguer sur le moule inférieur de bombage par aspiration. Ce procédé présente l'inconvénient de faire appel à un prébombage par gravité nécessitant une pluralité de squelettes circulant en train, ainsi qu'une forme supérieure aspirante.

Le WO2016/156735 enseigne le bombage de feuilles de verre contre une forme supérieure convexe.

Le EP1826186 décrit un bombage par aspiration et pressage contre une forme supérieure concave. La feuille de verre est montée vers la forme supérieure par un anneau support entourant le membre de pressage.

Le US5769919 enseigne le bombage de feuilles de verre par soufflage à partir d'une forme supérieure convexe.

Le FR2085464 décrit un bombage par aspiration et par pressage contre une forme supérieure concave. Un cadre de pressage est utilisé pour la finition du formage et la récupération de la feuille.

On a maintenant conçu un dispositif de bombage particulièrement adapté au verre mince et ne faisant pas appel à un bombage par gravité. De plus, le verre est bombé contre une forme pleine concave, car on s'est aperçu que le bombage de verre mince contre une forme pleine convexe produisait plus d'ondulations inacceptables en périphérie du verre.

Dans la présente demande, le verre est généralement sous la forme d'une feuille individuelle, mais peut également se trouver sous la forme d'un empilement de plusieurs feuilles, généralement dans ce cas, un empilement de deux feuilles. Afin de simplifier la description de l'invention, on parle simplement de « verre » pour désigner une feuille individuelle ou un empilement de feuilles. Qu'il s'agisse d'une seule feuille où de plusieurs feuilles superposées, le verre comprend deux faces principales externes, appelées ici face supérieure et face inférieure, le verre étant convoyé dans tout le procédé alors que la face supérieure est tournée vers le haut et la face inférieure est tournée vers le bas. Dans le cas d'un empilement, les feuilles restent empilées pendant tout le processus de convoyage, de bombage et de refroidissement, afin de garantir un formage identique de toutes les feuilles destinées à être assemblées. L'association de ces feuilles de verre dans le vitrage feuilleté final est ainsi réalisée dans de meilleures conditions, menant à un vitrage de meilleure qualité.

L'invention concerne le dispositif de la revendication indépendante de dispositif ainsi que ceux de ses revendications dépendantes. L'invention concerne également le procédé de la première revendication de procédé ainsi que ceux de ses revendications dépendantes.

Ainsi, l'invention concerne en premier lieu un dispositif de fabrication de verre bombé, ledit verre comprenant une feuille de verre ou un empilement de feuilles de verre, dit le verre, comprenant un poste de bombage, ledit poste de bombage comprenant une forme supérieure pleine concave de bombage et une contreforme inférieure de la forme supérieure, la forme supérieure de bombage étant placée au-dessus de la contreforme inférieure, un moyen d'amenée du verre jusqu'à un support final placé sous la forme supérieure de bombage, le support final étant circonscrit vue de dessus par la contreforme inférieure, le support final formant une surface de réception pour le verre sur laquelle le verre est en position optimale pour le bombage, la contreforme inférieure étant du type cadre et pouvant se déplacer verticalement pour passer en-dessous ou au-dessus de la surface de réception du verre, la forme supérieure de bombage et la contreforme inférieure pouvant être animés d'un mouvement vertical relatif leur permettant de se rapprocher pour pincer entre elles la périphérie du verre et de s'éloigner l'une de l'autre, la forme supérieure de bombage étant munie d'orifices dans sa face de contact avec le verre et d'un moyen d'aspiration pour bomber le verre contre sa face de contact par aspiration au travers desdits orifices.

Le verre est bombé dans le cadre d'un procédé industriel, c'est-à-dire que les verres (sous forme de feuille individuelle ou d'empilement de plusieurs feuilles) sont bombés thermiquement l'un après l'autre dans un poste de bombage puis refroidis les uns après les autres après bombage.

L'invention concerne également le procédé de bombage de verre par le dispositif selon l'invention, comprenant le positionnement du verre à sa position optimale de bombage entre la forme supérieure de bombage et la contreforme inférieure, le verre étant alors à une température de déformation plastique, puis le pinçage de la périphérie du verre entre la forme supérieure et la contreforme inférieure, puis le bombage du verre par aspiration contre la forme supérieure.

Le verre arrive par le moyen d'amenée jusqu'à une position optimale sur le support final sous la forme supérieure de bombage. Cette position optimale est la position que doit avoir le verre sur le support final pour que sa montée verticale vers la forme supérieure la place en position souhaitée contre la forme supérieure pour le pressage et le bombage. Cette montée faisant quitter le verre du support final pour lui faire rencontrer la forme supérieure est réalisée par un moyen de levage du verre, lequel peut être la contreforme inférieure. Ainsi, selon cette variante, le procédé de bombage comprend l'amenée du verre par le moyen d'amenée, notamment un lit de rouleaux, jusqu'au support final sur lequel il prend sa position optimale de bombage entre la forme supérieure de bombage et la contreforme inférieure, puis, le verre étant à sa température de déformation plastique, est soulevé par la contreforme inférieure jusqu'à son contact avec la forme supérieure, puis la périphérie du verre est pincée entre la forme supérieure et la contreforme inférieure, le bombage du verre étant réalisé contre la forme supérieure par aspiration au travers de la face de celle-ci, au moins partiellement après le pinçage. Le bombage peut en effet partiellement commencer avant que le pinçage ne soit terminé.

Le moyen de levage peut être une jupe entourant la forme supérieure. Pour faire monter le verre par une jupe, avantageusement, le verre dépasse légèrement, comme de quelques mm, du pourtour de la forme supérieure.

Le support final peut être un coussin d'air ou les derniers rouleaux d'un lit de rouleaux ayant servi comme moyen d'amenée du verre. Selon les variantes, ce support final peut donc être considéré comme faisant partie du moyen d'amenée si le verre finit sa course sur lui vers sa position optimale. Dans tous les cas, le support final ne fait pas obstacle au mouvement vertical de la contreforme inférieure pour passer au-dessus ou au-dessous du niveau de réception du verre sur le support final. En effet, qu'il s'agisse d'un coussin d'air ou de rouleaux, ce support final est circonscrit vue de dessus par la contreforme inférieure.

Le moyen d'amenée peut comprendre un convoyeur à rouleaux (c'est-à-dire un lit de rouleaux) allant jusque sous la forme supérieure de bombage auquel cas les derniers rouleaux situés sous la forme supérieure de bombage forment également le support final. Cependant, pour le cas où le moyen d'amenée est un lit de rouleaux, alors, avantageusement, le support final est un coussin d'air, le verre passant directement du lit de rouleaux au coussin d'air. En effet, le convoyage de verre mince sur rouleaux est délicat. Le verre, en contact direct avec les rouleaux, a en effet tendance à s'onduler facilement sur un lit de rouleaux lorsque sa vitesse est faible, ce qui est inévitable lorsque le verre arrive en position idoine vis-à-vis de la forme de bombage. Notamment, le risque de formation d'ondulations est encore plus élevé si le verre s'arrête sur les rouleaux. Or le positionnement idéal du verre (également appelé « focalisation », menant à sa position optimale) en vue du bombage est réalisé à très faible vitesse et le verre peut même s'arrêter. C'est pourquoi, dans la présente invention, les derniers instants de convoyage du verre avant bombage sont avantageusement réalisés sur un coussin d'air formant par ailleurs support final. Le verre passe donc avantageusement du lit de rouleaux directement sur un coussin d'air disposé sous la forme supérieure de bombage. La focalisation du verre sous la forme supérieure de bombage est réalisée alors que le verre est sur le coussin d'air. Le verre est ainsi correctement positionné en vue de son bombage sans avoir subi de bombage par gravité produisant une concavité sur la face supérieure du verre. Au contraire, on a observé que l'air chauffé du coussin d'air produit un bombage préliminaire de sorte qu'une concavité se forme sur la face inférieure du verre. Ceci constitue un prébombage produisant des courbures allant dans le même sens que celles du bombage final (face inférieure du verre concave), ce qui est avantageux. Avantageusement, une légère pente descendante dans le sens de déplacement est donnée au coussin d'air chaud de façon à ce que le verre puisse avancer doucement sur le coussin sous l'effet de son seul poids et de sa lancée. Le verre peut alors se focaliser grâce à des butées fixées sur la périphérie de la forme de bombage ou, de préférence, de la contreforme inférieure. Cette butée ne gêne pas la rencontre entre les deux formes devant presser le verre (forme supérieure et contreforme inférieure), une cavité pouvant être formée dans la forme exempte de butée pour recevoir la butée fixée sur l'autre forme. Avantageusement, la butée bascule vers l'extérieur si le verre, en position optimale, en montant vers le haut, risque de frotter par sa tranche contre la butée. Ce serait le cas par exemple si le support final est un coussin d'air et qu'une jupe entourant la forme supérieure aspire le verre avant que la contreforme inférieure portant les butées de focalisation du verre ne monte.

Le moyen d'amenée peut également comprendre une forme supérieure de transfert munie de trous d'aspiration dans sa face tournée vers le bas et apte à prendre en charge du verre hors du poste de bombage pour ensuite le placer dans le poste de bombage sur le support final. Les trous d'aspiration sont reliés à un système d'aspiration. Le verre étant non bombé et plat avant bombage, cette forme supérieure de transfert est avantageusement plate. Dans cette variante, le support final est avantageusement un coussin d'air. Le verre, tout d'abord posé à plat sur un support (comme une table plane, éventuellement chauffée) à proximité du poste de bombage, est pris en charge par la forme supérieure venue aspirer le verre par sa face supérieure, puis, par un déplacement latéral, la forme supérieure largue le verre sur le support final, par arrêt de son aspiration. De la sorte le verre n'a subi ni prébombage par gravité, ni arrêt sur des rouleaux, avant son bombage par la forme supérieure de bombage. Dans cette variante, au moment de sa prise en charge par la forme supérieure de transfert, le verre plat peut être à température ambiante ou par exemple entre la température ambiante et 400°C et en tout cas en-dessous du domaine de température de déformation plastique, et peut être posé sur un support, comme une table, hors du poste de bombage. C'est alors le coussin d'air chaud qui porte le verre à une température de déformation plastique. Ce chauffage est d'autant plus rapide et compatible avec un procédé de cadence industrielle que l'épaisseur du verre est faible, notamment s'agissant d'une feuille individuelle d'épaisseur inférieure ou égale à 1,3 mm et même d'épaisseur inférieure ou égale à 1 mm. L'avantage principal de cette configuration est sa compacité car elle ne fait pas appel à un four à rouleaux de convoyage pour amener le verre jusqu'au poste de bombage. En effet, un four à rouleaux est consommateur de place au sol. Par contre, le temps de cycle est plus long, puisqu'il faut chauffer le verre par le coussin d'air chaud. Avantageusement, le poste de bombage est dans un four formant cellule de bombage, ladite cellule étant munie de portes permettant au verre d'y rentrer ou d'en sortir. Afin de garder l'avantage de la compacité tout en diminuant l'inconvénient du temps de cycle plus élevé, il est possible de maintenir le support sur lequel repose le vitrage hors du four à une température plus élevée que la température ambiante, comme entre 100 et 400 °C, voire plus chaud. Pour ce mode de fonctionnement, le verre est une feuille individuelle car une telle forme supérieure de transfert ne peut pas entraîner un empilement de feuilles. Ainsi, le dispositif selon l'invention peut comprendre une forme supérieure de transfert, laquelle est pleine et munie d'orifices dans sa face de contact avec le verre et d'un moyen d'aspiration au travers de ces orifices, apte à prendre en charge le verre par déclenchement de son aspiration, ladite forme étant mobile et apte à prendre en charge le verre hors du poste de bombage et à le transférer dans le poste de bombage puis à le larguer sur le support final.

La contreforme inférieure est un cadre venant au contact du verre seulement en sa périphérie, généralement au plus jusqu'à 2 cm et de préférence au plus jusqu'à 1 cm du bord du verre. Avantageusement, la contreforme inférieure déborde du verre vers l'extérieur. Son contact avec le verre peut éventuellement se limiter à toucher l'arrête inférieure du bord du verre. La contreforme inférieure (pouvant également être appelée anneau de pressage) a une forme complémentaire de celle de la forme supérieure. De la sorte, quand elle presse la périphérie de la face inférieure du verre, une étanchéité entre le verre et la forme supérieure peut se produire. Ce pressage est donc suffisant pour apporter l'étanchéité entre le verre et la forme supérieure de bombage. Le pressage est cependant de préférence suffisamment faible pour laisser glisser le verre entre la forme supérieure de bombage et la contreforme inférieure. En effet, au fur et à mesure que le bombage par aspiration est réalisé, les bords du verre se déplacent vers l'intérieur puisque la zone centrale du verre se déplace vers la zone centrale de la forme supérieure. Si le verre ne peut pas glisser entre la forme supérieure de bombage et la contreforme inférieure, alors le bombage par aspiration pourrait produire une légère diminution de l'épaisseur du verre.

La forme supérieure de bombage concave et la contreforme inférieure peuvent être animées d'un mouvement vertical relatif. Ceci signifie que forme et contreforme peuvent se rejoindre pour pincer le verre, soit par déplacement de l'une d'elle seulement ou par déplacement des deux. Après pinçage du verre, elles peuvent également s'éloigner pour :
- permettre à la forme supérieure de larguer le verre, notamment sur un cadre de refroidissement venu se placer entre la forme et la contreforme, et
- permettre à la contreforme de descendre sous le niveau de la surface de réception du verre sur le support final.

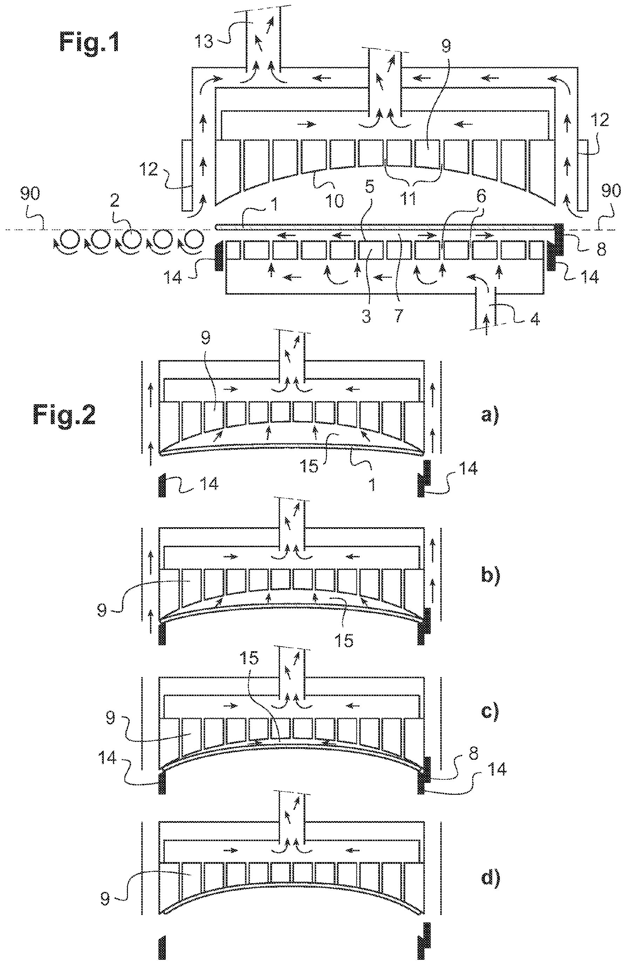

La forme supérieure est pleine et munie d'une pluralité d'orifices dans sa face de contact avec le verre. Une face pleine signifie qu'elle n'est pas du type cadre pour venir en contact seulement avec la périphérie, mais que sa surface de contact peut venir au contact de toute une surface principale du verre, la périphérie et la zone centrale. Une telle face de contact concave munie d'une pluralité d'orifices est par exemple représentée par la figure 2 du WO2006/072721, sauf que dans la présente invention cette face percée est orientée vers le bas. Un moyen d'aspiration communique avec ces orifices pour aspirer la face principale supérieure du verre contre la face de contact, et le bomber par aspiration au travers desdits orifices.

Pour le bombage, le verre doit être à une température de déformation plastique, généralement comprise entre 640 et 750°C selon la composition du verre. Il peut être chauffé lors de son convoyage par le moyen d'amenée. Notamment, s'il s'agit d'un lit de rouleaux, celui-ci traverse avantageusement un four tunnel pour chauffer le verre. Si un coussin d'air est utilisé en tant que support final, le coussin d'air envoie de l'air chaud à une température de déformation plastique du verre. Avantageusement, la forme supérieure de bombage est à une température inférieure à celle de l'air du coussin d'air, et à une température susceptible de refroidir suffisamment le verre à son contact pour qu'il se fige. La forme du verre est alors fixée et ne se déforme plus après son largage par la forme supérieure de bombage. Ainsi, le verre est refroidi au contact avec la forme supérieure de bombage de sorte à figer sa forme conformément à celle de la face de contact de la forme supérieure de bombage.

Le verre étant à une température de déformation plastique, la périphérie du verre est pincée entre la forme supérieure et la contreforme inférieure, puis le verre est bombé jusqu'à sa forme finale par aspiration contre la forme supérieure. Le pinçage du verre en sa périphérie sert à donner à la périphérie du verre sa forme finale et à étancher le contact entre le verre et la forme supérieure afin que l'aspiration par cette dernière produise effectivement une force de plaquage du verre contre la forme supérieure. Ainsi, l'aspiration au travers des orifices de la face de contact de la forme supérieure peut commencer avant que le pressage d'étanchéité de la périphérie ne se soit produit.

Selon une configuration préférée, le moyen d'amenée est un lit de rouleaux et le support final est un coussin d'air. Avantageusement, le verre, en contact direct avec le lit de rouleaux, est chauffé sur le lit de rouleaux à une température inférieure à celle que va lui donner l'air chaud du coussin d'air, de sorte que le verre ne subisse pas trop de déformations lors de son convoyage sur les rouleaux. En arrivant sur le coussin d'air, c'est l'air plus chaud du coussin d'air qui donne alors au verre sa température de bombage. Bien entendu, il n'est pas exclu que le verre ait déjà sa température de déformation plastique avant d'arriver sur le coussin d'air. Avantageusement, le verre passe directement du lit de rouleaux sur le coussin d'air, ce dernier étant alors placé juste après le lit de rouleaux. Il n'est donc pas nécessaire que le verre s'arrête entre le lit de rouleaux et le coussin d'air.

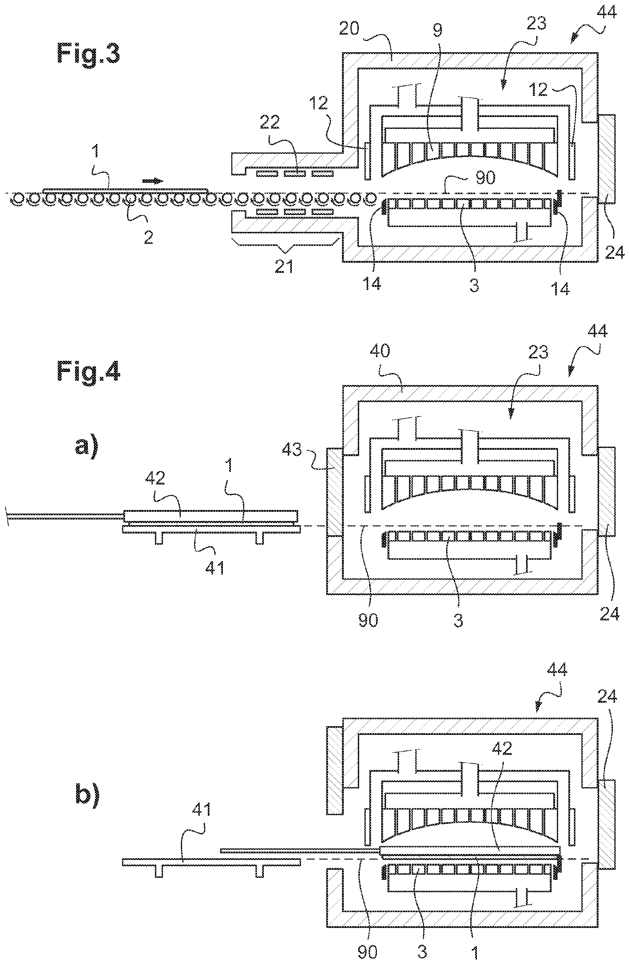

Lorsque le verre est sur le support final et à sa température de bombage, la périphérie de sa face supérieure doit venir au contact de la forme supérieure. Celle-ci peut se baisser pour aller à la rencontre du verre, et/ou un moyen de levage du verre peut faire monter celui-ci. La contreforme inférieure peut éventuellement servir de moyen de levage. Cependant, compte tenu de ce que le verre est à sa température de déformation, un certain bombage gravitaire pourrait avoir lieu sur la contreforme, ce qui n'est pas souhaité puisque ce bombage gravitaire donnerait au verre une forme inverse à celle souhaitée et donnée ensuite par la forme supérieure. En effet, la forme supérieure est concave de sorte que la face supérieure du verre en fin de bombage est convexe, or le bombage gravitaire sur la contreforme inférieure donnerait une forme concave à la face supérieure du verre, ce qui n'est pas souhaité. Avantageusement, le moyen de levage du verre est une jupe aspirante entourant la forme supérieure de bombage. Un moyen d'aspiration aspire l'air entre la jupe et la forme supérieure. Cette aspiration est suffisante pour faire monter le verre (même sous forme d'empilement de plusieurs feuilles) jusqu'à son contact avec la forme supérieure. Une telle jupe est par exemple décrite par la figure 3 du WO2011/144865, sauf que dans cette figure la forme supérieure est convexe alors que selon l'invention, la forme supérieure est concave. Une fois le verre au contact de la forme supérieure, la contreforme inférieure presse la périphérie du verre et l'aspiration par les orifices dans la face de contact (que l'on peut appeler aspiration de bombage) bombe le verre. Avantageusement, l'aspiration par la face de contact de la forme supérieure intervient avant le pressage par la contreforme inférieure pour commencer à bomber la zone centrale du verre. Dès que la contreforme inférieure a commencé de presser le verre contre la forme supérieure, l'aspiration par la jupe peut cesser. Lorsque l'aspiration de bombage commence, la contreforme inférieure plaque encore quelques instants le verre contre la forme supérieure de bombage afin 1) de bien sceller l'espace compris entre la périphérie de la face de bombage de la forme supérieure et la périphérie de la face supérieure du verre, 2) d'éviter les fuites et ainsi de maintenir un bon niveau de dépression (vide d'air) entre le verre et la forme supérieure de bombage et 3) laisser le temps au verre de se déformer et de venir en contact avec la surface de la forme supérieure de bombage. Après cela, la contreforme inférieure peut redescendre puisque le verre reste maintenu au contact de la forme supérieure grâce à l'aspiration de bombage.

Ainsi, selon un mode avantageux de l'invention, la forme supérieure de bombage est munie d'une jupe aspirante apte à soulever le verre et le maintenir contre la forme supérieure. Une fois que le verre est sur le support final, notamment du type coussin d'air, et à sa température de bombage, la jupe aspirante soulève le verre jusqu'à son contact contre la forme supérieure de bombage, puis le pinçage du verre entre forme et contreforme est réalisé. Le bombage peut commencer avant le pinçage si l'aspiration au travers de la face de contact de la forme supérieure est enclenchée avant le pinçage. Le bombage est terminé après le pinçage. Le bombage du verre est donc réalisé contre la forme supérieure de bombage par aspiration au travers de la face de celle-ci, au moins partiellement après le pinçage, et le cas échéant partiellement avant le pinçage.

L'invention concerne notamment un procédé selon lequel le support final comprend un coussin d'air, le moyen d'amenée comprend un lit de rouleaux amenant le verre jusqu'au coussin d'air, le verre pouvant passer directement du lit de rouleaux au coussin d'air, la forme supérieure est munie d'une jupe aspirante apte à soulever le verre et à le maintenir contre la forme supérieure, ledit procédé comprenant l'amenée du verre par le lit de rouleaux jusqu'au coussin d'air sur lequel il prend sa position optimale de bombage entre la forme supérieure de bombage et la contreforme inférieure, puis, le verre étant à sa température de déformation plastique, est soulevé par la jupe aspirante jusqu'à son contact avec la forme supérieure, puis la périphérie du verre est pincée entre la forme supérieure et la contreforme inférieure, le bombage du verre étant réalisé contre la forme supérieure par aspiration au travers de la face de celle-ci. Ce bombage du verre est réalisé contre la forme supérieure de bombage par aspiration au travers de la face de celle-ci, au moins partiellement après le pinçage, et le cas échéant partiellement avant le pinçage. En effet, le bombage peut commencer avant le pinçage si l'aspiration au travers de la face de contact de la forme supérieure est enclenchée avant le pinçage.

La forme supérieure de bombage est concave, ce qui présente plusieurs avantages par rapport au cas d'une forme supérieure convexe. Tout d'abord, cette concavité est favorable au confinement de l'air et de la chaleur dans le creux de la forme supérieure, l'air chaud restant alors en quelque sorte emprisonné dans cet espace creux. Ceci est très favorable sur le plan énergétique. De plus, cette concavité permet à la forme supérieure d'être toujours très proche des éléments inférieurs de bombage (support final et contreforme inférieure), ce qui renforce encore le confinement de l'air chaud et occasionne des déplacements plus courts de la forme et/ou de la contreforme. Cette compacité du poste de bombage, très favorable sur le plan énergétique, permet même éventuellement de ne pas le placer dans un four. Ainsi, l'écart entre le support final (sa surface de réception du verre) et le point le plus bas de la surface de formage de la forme supérieure de bombage peut même rester en permanence inférieur à (10 mm + l'épaisseur du verre) et même inférieur à (3 mm + l'épaisseur du verre) voire même inférieur à (1 mm + l'épaisseur du verre). Autre avantage de la forme concave, un plaquage du verre contre une forme convexe occasionne plus facilement un contact plus appuyé en zone centrale le temps que la périphérie contacte effectivement la forme supérieure. De plus, un plaquage du verre contre une forme convexe occasionne la formation de plis inacceptables sur la périphérie de verre mince, notamment d'épaisseur inférieure ou égale à 1,3 mm et même d'épaisseur inférieure ou égale à 1 mm. On a pu observer que cela ne se produit pas dans le cas d'une forme concave. Enfin, un verre mince est moins lourd qu'un verre épais, et le verre mince aspiré par la forme supérieure concave monte très rapidement pour se plaquer contre celle-ci, du fait de sa légèreté. Par ailleurs, un verre mince change plus rapidement de température par conduction qu'un verre épais, de sorte que son figeage au contact de la forme supérieure est rapide.

Une fois le bombage du verre contre la forme supérieure de bombage réalisé, les deux formes (forme supérieure et contreforme inférieure) se séparent, le verre restant maintenu contre la forme supérieure dont l'aspiration de bombage est maintenue. A ce stade, pour le cas d'un empilement de plusieurs feuilles, il est possible qu'il soit nécessaire que l'aspiration de la jupe fonctionne également pour maintenir l'empilement entier de feuilles contre la forme supérieure. En effet, le vide créé par les orifices dans la face pleine de la forme supérieure de bombage s'exerce surtout sur la feuille en position supérieure et pas sur les autres feuilles de l'empilement. Cependant, comme toutes ces feuilles sont bien compactées et sans air entre elles, l'empilement devrait rester formé même sans fonctionnement de l'aspiration par la jupe, au moins le temps que le cadre de refroidissement se positionne sous le verre. Si l'aspiration par la jupe a été arrêtée une fois le pressage entre la forme et la contreforme réalisé, alors elle est éventuellement remise en route pour maintenir l'empilement entier contre la forme supérieure. Le cas échéant, l'aspiration par la jupe peut ne pas être arrêtée entre la montée du verre vers la forme supérieure et son largage sur le support de refroidissement.

Après bombage, un cadre de refroidissement mobile latéralement peut alors être placé sous la forme supérieure de bombage afin de récupérer le verre bombé largué par celle-ci. Le cadre de refroidissement éloigne ensuite le verre du poste de bombage et le verre est ensuite entrainé vers une zone de refroidissement.

Le poste de bombage comprenant la forme supérieure de bombage avec le cas échéant sa jupe, le support final et la contreforme inférieure de bombage ne sont pas forcément dans une enceinte et peut être dans une pièce à l'air ambiant. Une telle configuration à l'air ambiant présente les avantages suivant : a) un moindre coût, b) une grande visibilité par l'opérateur qui peut facilement diagnostiquer un dysfonctionnement, c) une meilleure accessibilité de l'installation permettant des interventions plus rapides en cas d'incident. Cependant, cette configuration présente les inconvénients liés aux pertes énergétiques ainsi que d'éventuels problèmes de dilatation mal maitrisée des structures mécaniques de l'installation. Avantageusement, le poste de bombage comprenant la forme supérieure de bombage avec sa jupe éventuelle, le support final et la contreforme inférieure, est dans un four, avantageusement muni de portes afin de confiner la chaleur tout en permettant l'entrée et la sortie du verre. Les avantages de cette configuration sont : a) une plus grande stabilité du procédé, b) un meilleur positionnement mécanique des différents organes par suppression des dilatations mal maitrisées des structures de l'installation. Les inconvénients de cette configuration résident essentiellement dans la plus faible accessibilité de l'installation.

Avantageusement les surfaces de contact pour le verre de la forme supérieure de bombage et de la contreforme inférieure sont habillées d'un matériau fibreux réfractaire bien connu de l'homme du métier pour adoucir le contact d'un outil avec le verre chaud. Il peut notamment s'agir d'un feutre ou d'un tricot.

Le coussin d'air peut être un simple caisson percé d'une pluralité de trous pour l'injection de l'air chaud. La partie supérieure du caisson comprenant ces trous peut être en métal ou en un matériau céramique. Les points d'impact des jets d'air contre le verre en sustentation peuvent éventuellement produire de petites déformations de la feuille de verre, lesquelles peuvent perdurer lors des étapes suivantes du procédé de bombage. Notamment, ces défauts sont éventuellement révélés lorsque l'on assemble deux feuilles de verre composant un produit feuilleté final. Ces marquages sont d'autant plus importants que la pression de l'air injecté est élevée et que les orifices du caisson sont peu nombreux. Pour minimiser cet effet, les trous d'injection de l'air sont avantageusement espacés (de bord de trou à bord de trou) d'une distance comprise dans le domaine allant de 1 à 10 mm. Les trous d'injection peuvent avoir un diamètre compris dans le domaine allant de 0,5 à 5 mm. Par ailleurs, différents essais réalisés ont montré qu'il était préférable que la température de l'air injecté par le coussin d'air et la température du verre lui-même soient très proches. En effet, lorsque la différence entre ces deux températures est trop élevée, notamment supérieure à 5 °C, des distorsions optiques en transmission peuvent apparaître sur les verres produits. Dans ce cas aussi, ces distorsions sont plus importantes lorsque l'on assemble deux feuilles de verre composant un produit feuilleté final.

Le coussin d'air peut aussi souffler son air chaud au travers d'un matériau poreux. Un tel dispositif est très performant et permet un supportage très uniforme du verre. Le matériau poreux peut être composé par exemple d'un empilement de toiles métalliques calandrées et frittées à chaud telles les plaques « Plymesh® » vendues par la société Haver & Boecker ou bien de grains d'Inox compressés et frittés tels que les produits « Poral® » vendus par la société Sintertech.

Afin d'adoucir un éventuel frottement entre le verre et la surface supérieure du caisson du coussin d'air, un matériau fibreux, en fibres réfractaires, notamment un feutre métallique aiguilleté à base de fibres fines en acier inoxydable peut être fixé sur la surface supérieure du caisson du coussin d'air. Le moyen de fixation du matériau fibreux, peut être une colle haute température ou bien de la soudure par point. Pour le cas où le caisson du coussin d'air est en métal avec une surface supérieure percée, on peut effectuer les trous simultanément dans la tôle supérieure du caisson et dans le feutre métallique, après que le feutre et la tôle aient été solidarisés. Le caisson du coussin d'air peut être avantageusement composé de plusieurs compartiments individuels transversaux par rapport au sens de défilement du verre afin d'éviter le déséquilibrage du coussin lors de l'arrivée du vitrage.

La pression exercée par la lame d'air entre la surface supérieure du caisson du coussin et la surface inférieure du verre peut se traduire par une accumulation d'air chaud pouvant même bomber le verre (à l'image d'une bulle), ce dernier prenant une forme régulière et dont la convexité est dirigée vers le haut. L'amplitude de ce phénomène de bombage du verre dépend de la géométrie du coussin utilisé et des pressions et débit d'air. Ce phénomène peut être évité en limitant la quantité d'air injecté sous la feuille de verre. Par ailleurs, cet effet de bombage du verre en position statique sur le coussin d'air chaud, peut aussi être limité grâce à l'aménagement dans le caisson du coussin d'air d'évents permettant à l'air chaud de s'échapper et ainsi d'éviter son accumulation sous le verre. Ces évents sont des canalisations traversant le caisson du coussin d'air et permettent à l'air de revenir sous le coussin d'air et d'être évacué. Les évents ont une canalisation indépendante de celle servant à l'alimentation en air du coussin d'air.
La figure 1 représente un dispositif selon l'invention prêt à bomber une feuille de verre individuelle. Ce dispositif est ici représenté à l'air libre, c'est-à-dire pas dans une enceinte comme un four. La feuille de verre 1 a été amenée par le lit de rouleaux 2 (moyen d'amenée) sur le coussin d'air 3 (support final). Ce dernier est constitué d'un caisson alimenté en air par une canalisation 4, la surface supérieure 5 du coussin étant percée d'orifices 6 afin que des jets d'air viennent repousser la face principale inférieure 7 du verre. Le déplacement de la feuille a été stoppé en position optimale focalisée par la butée 8. Tel que représenté, la feuille se trouve sur le coussin d'air juste avant son bombage. La feuille se trouve sous une forme supérieure de bombage 9 dont la face de contact 10 pour le verre est concave et tournée vers le bas. Cette face est munie d'orifices 11 au travers desquels une aspiration peut s'exercer sur le verre pour le bomber et/ou le retenir contre la forme supérieure. Une jupe 12 entoure la forme supérieure 9. Cette jupe est reliée à un système d'aspiration 13 permettant d'exercer une aspiration périphérique capable de soulever le verre jusqu'à ce que celui-ci vienne au contact de la forme supérieure 9. Une contreforme inférieure 14 est représentée en position basse et sous le plan 90 comprenant la surface de réception du verre afin de pouvoir laisser passer le verre en provenance du lit de rouleaux sur le coussin d'air. En cette position, la contreforme inférieure 14 entoure le coussin d'air 3. La contreforme inférieure 14 est capable de monter pour aller pincer la périphérie du verre contre la forme supérieure 9.
La figure 2 représente l'étape de bombage du verre contre une forme supérieure 9. Au stade représenté en a), la feuille a été montée jusqu'au contact de sa périphérie avec la forme supérieure grâce à une jupe. Si la feuille venait d'être supportée par un coussin d'air en tant que « support final », elle s'est déjà bombée partiellement sur le coussin d'air. En plus, l'aspiration par la surface concave de la forme supérieure a été déclenchée avant même que la contreforme inférieure 14 n'intervienne pour presser le verre. Cette aspiration provoque un vide dans l'espace 15 entre le verre 1 et la forme supérieure 9, ce qui engendre la force de bombage contre la forme supérieure. Le verre se bombe donc déjà, comme représenté en a). En b), la contreforme 14 est montée pour presser légèrement la périphérie de la face inférieure de la feuille dans le but d'étancher le contact entre le verre 1 et la forme supérieure 9. Ce pressage donne à la périphérie du verre sa bonne forme et l'aspiration au travers des orifices 11 termine le bombage en zone centrale comme représenté en d). Le stade en b) est un stade intermédiaire du bombage entre a) et c), alors que l'aspiration par la jupe n'est pas encore arrêtée. Le stade en c) est le stade suivant du bombage, l'aspiration par la jupe étant arrêtée. Le stade en d) est le stade final, la contreforme 14 étant déjà redescendue. Au cours de ce processus de bombage, le bord du verre a pu glisser entre la contreforme 14 et la forme supérieure puisque la zone centrale du verre se déplaçait vers la zone centrale de la forme supérieure.
La figure 3 représente un dispositif selon l'invention identique à celui de la figure 1 sauf que le poste de bombage 23 (coussin d'air 3 en tant que support final, forme supérieure de bombage 9 avec sa jupe 12, contreforme inférieure 14 de pressage) est placé dans un four 20, l'ensemble four + poste de bombage constituant une cellule de bombage 44. Le verre 1 est placé sur un convoyeur à rouleaux 2 (moyen d'amenée) en entrée four. Dans une première partie 21 du four, du type four tunnel à cet endroit, des éléments chauffants 22 alimentés électriquement commencent à chauffer le verre au cours de son convoyage vers le poste de bombage 23. Le verre 1 atteindra sa température de bombage par échange thermique avec le coussin d'air chaud 3. Le four comprend une porte 24 pouvant s'écarter pour laisser passer un cadre de refroidissement (non représenté) et se refermer après évacuation du verre.
La figure 4 représente un dispositif selon l'invention comprenant un poste de bombage 23 identique à celui des figures 1 et 3, ledit poste étant dans un four 40. Le verre est posé hors du poste de bombage sur une plaque 41 à la température ambiante ou chauffée par exemple entre 100 et 400°C. Il est ensuite pris en charge par une forme supérieure plane aspirante 42, laquelle effectue ensuite un déplacement latéral jusqu'entre la forme supérieure et la contreforme inférieure puis largue le verre sur le coussin d'air 3 formant support final. Le verre est directement chauffé par l'air sortant du coussin d'air 3. Selon ce mode de réalisation, la forme supérieure 42 prend en charge le verre (figure 4a) grâce à une force d'aspiration et le sépare de la plaque 41. La porte 43 monte et la forme supérieure 42, en tant que moyen d'amenée, entraîne le verre 1 dans la cellule de bombage 44 (figure 4b) et largue le verre sur le coussin d'air 3 (support final). La forme supérieure 42 peut ensuite ressortir de la cellule de bombage 44 pour venir prendre en charge le verre suivant déposé entre temps sur la plaque 41. Après bombage, le verre est évacué de la cellule de bombage 44 par un cadre de refroidissement passant par la porte 24 pour récupérer le verre sous la forme supérieure, le sortir de la cellule de bombage et l'entraîner en zone de refroidissement.

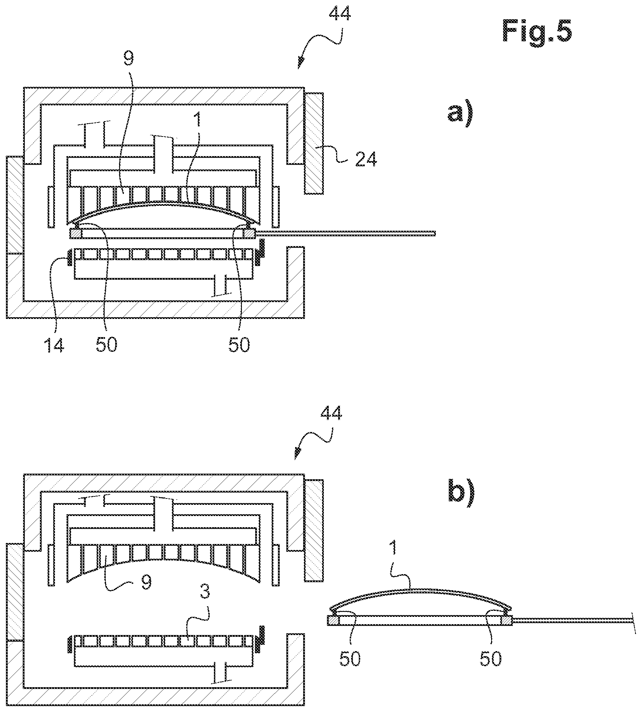

La figure 5 représente la partie du procédé selon l'invention après le bombage. En figure 5a) le verre 1 a déjà été bombé par aspiration contre la forme supérieure 9. La contreforme 14 est redescendue et le verre est maintenu contre la forme supérieure 9 du fait que l'aspiration au travers de cette forme a été maintenue. Une porte 24 s'est ouverte pour laisser passer un cadre de refroidissement 50 qui se place sous le verre. Ce cadre offre au verre une surface de contact complémentaire à la sienne à ce stade. L'aspiration au travers de la forme supérieure 9 est stoppée et le cas échéant un léger soufflage au travers des mêmes orifices que pour l'aspiration peut être exercé afin de larguer la feuille bombée sur le cadre de refroidissement 50. Une fois le verre 1 sur le cadre de refroidissement 50, la forme supérieure 9 monte et le cadre de refroidissement 50 sort de la cellule de bombage 44 (voir figure 5b) pour emmener le verre vers une zone de refroidissement.

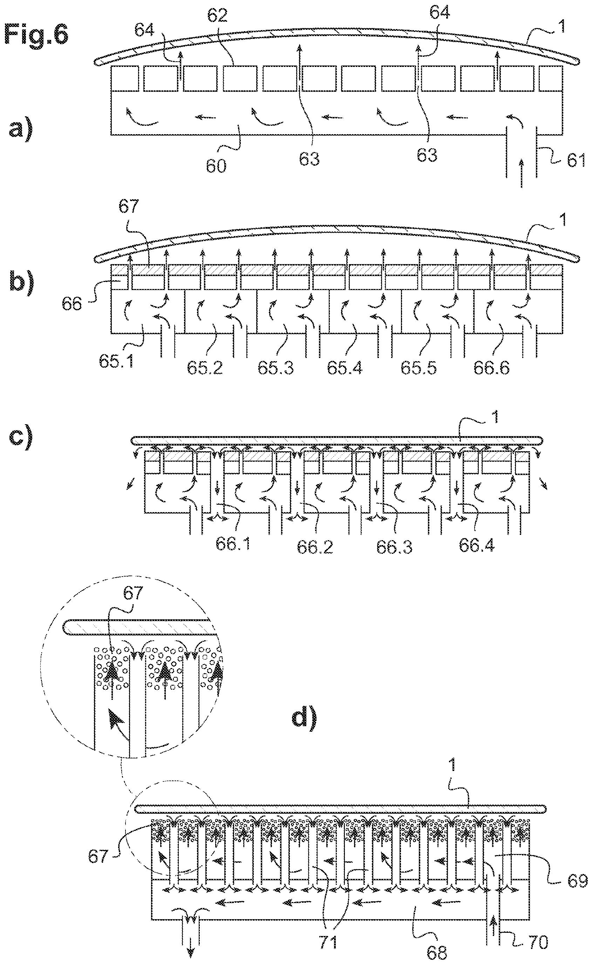

La figure 6 représente différentes variantes de coussin d'air. En Figure 6a), il s'agit du mode de réalisation le plus simple. Un caisson 60 est alimenté en air par une canalisation 61. La face supérieure 62 du caisson est percée d'orifices 63 pour que des jets d'air 64 se forment en direction de la face inférieure du verre. On a pu observer que le verre 1 se bombe naturellement sur le coussin d'air de sorte que sa face inférieure soit concave. Ce prébombage est avantageux et se forme dans le même sens que le bombage final que doit donner la forme supérieure 9.
En figure 6b), le coussin d'air chaud est composé d'une pluralité de compartiments individuels 65.1 à 65.6, ce qui permet de ne pas déséquilibrer l'aéraulique du coussin lorsque le bord avant du verre arrive sur le coussin. C'est un avantage lorsqu'un verre arrive puisque l'équilibrage aéraulique d'un compartiment n'influence pas celui des suivants. Ici, la face supérieure du caisson est un assemblage d'une plaque métallique 66 et d'un feutre 67 solidarisés à la plaque métallique. La plaque et le feutre sont percés pour former les orifices donnant naissance aux jets d'air chaud.
En figure 6c), le caisson comprend une pluralité de compartiments individuels comme vu en figure 6b), ces compartiments étant séparés par un espace 66.1 à 66.4 permettant à l'air emprisonné entre le coussin et la surface inférieure du vitrage de s'évacuer en revenant vers le bas au travers du coussin, ce qui évite un phénomène de déformation du vitrage par les jets d'air. Le verre est ici représenté non encore bombé mais il se bombe comme en a) et b).
En figure 6d), le coussin d'air chaud est d'un seul tenant (pas compartimenté) et sa surface supérieure 67 est en un matériau poreux à travers lequel l'air chaud peut diffuser. Un caisson 69 est alimenté en air par une canalisation 70 et cet air traverse le matériau poreux pour souffler en surface vers le verre 1. Des évents 71 ont été ménagés au travers du matériau poreux, permettant à l'air de s'échapper en revenant vers le bas au travers du coussin. L'air du coussin ayant été émis vers le verre puis revenu dans le caisson est collecté dans un caisson inférieur 68. Le verre est ici représenté non encore bombé mais il se bombe comme en a) et b).

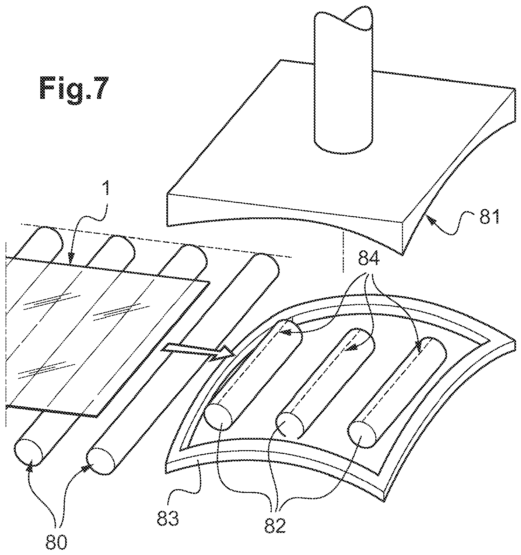

La figure 7 représente un mode de réalisation selon lequel le moyen d'amenée du verre 1 comprend un lit de rouleaux 80 allant jusque sous la forme supérieure de bombage 81. C'est donc le même lit de rouleaux qui forme le moyen d'amenée et le support final. Les derniers rouleaux 82, formant support final, offrent au verre sa position optimale pour le bombage entre la forme supérieure de bombage 81 et la contreforme inférieure 83. Les butées de focalisation reliées à la contreforme 83 ne sont pas représentées. Les derniers rouleaux sont ici moins longs que les précédents et sont circonscrits vu de dessus par la contreforme inférieure 83. Cette dernière peut ainsi être abaissée sous la surface de réception du verre comprenant leurs lignes de contact 84 avec le verre (en pointillé sur la figure 7), ou peut monter pour prendre le verre en charge lorsque celui-ci est en position optimale et/ou pour aller presser sa périphérie contre la forme supérieure concave de bombage 81.

## Revendications

1. Dispositif de fabrication de verre bombé, ledit verre comprenant une feuille de verre ou un empilement de feuilles de verre, dit le verre, comprenant un poste de bombage (23), ledit poste de bombage comprenant une forme supérieure pleine concave (9) de bombage et une contreforme inférieure (14) de la forme supérieure, la forme supérieure de bombage étant placée au-dessus de la contreforme inférieure, un moyen d'amenée du verre jusqu'à un support final (3) placé sous la forme supérieure de bombage, le support final étant circonscrit vue de dessus par la contreforme inférieure, le support final formant une surface de réception pour le verre sur laquelle le verre est en position optimale pour le bombage, la contreforme inférieure étant du type cadre et pouvant se déplacer verticalement pour passer en-dessous ou au-dessus de la surface de réception du verre, la forme supérieure de bombage et la contreforme inférieure pouvant être animés d'un mouvement vertical relatif leur permettant de se rapprocher pour pincer entre elles la périphérie du verre (1) et de s'éloigner l'une de l'autre, la forme supérieure de bombage étant munie d'orifices dans sa face de contact avec le verre et d'un moyen d'aspiration pour bomber le verre contre sa face de contact par aspiration au travers desdits orifices.

2. Dispositif selon la revendication précédente, **caractérisé en ce que** le support final comprend un coussin d'air.

3. Dispositif selon la revendication précédente, **caractérisé en ce que** le moyen d'amenée comprend un lit de rouleaux (2) amenant le verre jusqu'au coussin d'air (3), le verre pouvant passer directement du lit de rouleaux au coussin d'air.

4. Dispositif selon la revendication 2 **caractérisé en ce que** le moyen d'amenée comprend une forme supérieure de transfert pleine (42) et munie d'orifices dans sa face de contact avec le verre et d'un moyen d'aspiration au travers de ces orifices, ladite forme étant mobile et apte à prendre en charge le verre par aspiration hors du poste de bombage et à le larguer sur le coussin d'air (3) dans le poste de bombage.

5. Dispositif selon la revendication 1, **caractérisé en ce que** le moyen d'amenée comprend un lit de rouleaux formant également le support final.

6. Dispositif selon l'une des revendications précédentes, **caractérisé en ce que** la forme supérieure de bombage est munie d'une jupe aspirante (12) apte à soulever le verre et à le maintenir contre la forme supérieure.

7. Dispositif selon l'une des revendications précédentes, **caractérisé en ce qu'**un cadre de refroidissement (50) mobile latéralement est apte à être placé sous la forme supérieure de bombage afin de récupérer le verre bombé largué par la forme supérieure et l'éloigner du poste de bombage.

8. Dispositif selon l'une des revendications précédentes, **caractérisé en ce que** le poste de bombage (23) est dans un four (20).

9. Procédé de bombage d'une feuille de verre ou d'un empilement de feuilles de verre, dit le verre, par le dispositif de l'une des revendications précédentes comprenant le positionnement du verre à sa position optimale de bombage entre la forme supérieure de bombage (9) et la contreforme inférieure (14), le verre étant alors à une température de déformation plastique, puis le pinçage de la périphérie du verre entre la forme supérieure et la contreforme inférieure, le bombage du verre étant réalisé contre la forme supérieure par aspiration au travers de la face de celle-ci, au moins partiellement après le pinçage.

10. Procédé selon la revendication précédente, **caractérisé en ce que** la forme supérieure est munie d'une jupe aspirante (12) apte à soulever le verre et le maintenir contre la forme supérieure et **en ce que** après que le verre soit en position optimale de bombage sur le support final, la jupe aspirante soulève le verre jusqu'à son contact contre la forme supérieure, puis le pinçage est réalisé.

11. Procédé de bombage de verre par le dispositif de la revendication 3, la forme supérieure étant munie d'une jupe aspirante apte à soulever le verre et à le maintenir contre la forme supérieure, ledit procédé comprenant l'amenée du verre par le lit de rouleaux jusqu'au coussin d'air sur lequel il prend sa position optimale de bombage entre la forme supérieure de bombage et la contreforme inférieure, puis, le verre étant à sa température de déformation plastique, est soulevé par la jupe aspirante jusqu'à son contact avec la forme supérieure, puis la périphérie du verre est pincée entre la forme supérieure et la contreforme inférieure, le bombage du verre étant réalisé contre la forme supérieure par aspiration au travers de la face de celle-ci, au moins partiellement après le pinçage.

12. Procédé de bombage de verre par le dispositif de la revendication 1, comprenant l'amenée du verre par le moyen d'amenée, notamment un lit de rouleaux, jusqu'au support final sur lequel il prend sa position optimale de bombage entre la forme supérieure de bombage et la contreforme inférieure, puis, le verre étant à sa température de déformation plastique, est soulevé par la contreforme inférieure jusqu'à son contact avec la forme supérieure, puis la périphérie du verre est pincée entre la forme supérieure et la contreforme inférieure, le bombage du verre étant réalisé contre la forme supérieure par aspiration au travers de la face de celle-ci, au moins partiellement après le pinçage.

13. Procédé selon l'une des revendications précédentes de procédé, caractérisé en ce l'écart entre le support final et le point le plus bas de la surface de formage de la forme supérieure de bombage reste en permanence inférieur à (10 mm + l'épaisseur du verre) et même inférieur à (3 mm + l'épaisseur du verre) voire même inférieur à (1 mm + l'épaisseur du verre).

14. Procédé selon l'une des revendications précédentes de procédé, **caractérisé en ce qu'**après bombage, un cadre de refroidissement mobile latéralement est placé sous la forme supérieure de bombage afin de récupérer le verre bombé largué par la forme supérieure de bombage puis de l'éloigner du poste de bombage en vue de son refroidissement.

15. Procédé selon l'une des revendications précédentes de procédé, **caractérisé en ce qu'**entre le moment où le verre commence à se rapprocher de la forme supérieure de bombage et son contact avec la forme supérieure de bombage, le verre est à une température supérieure à celle de la forme supérieure de bombage.

16. Procédé selon la revendication précédente **caractérisé en ce que** le verre est refroidi au contact avec la forme supérieure de bombage de sorte à figer sa forme conformément à celle de la face de contact de la forme supérieure de bombage.

17. Procédé selon l'une des revendications précédentes de procédé, **caractérisé en ce que** le verre est une feuille individuelle d'épaisseur d'au plus 1,3 mm, voire d'épaisseur d'au plus 1 mm.

18. Procédé selon l'une des revendications précédentes de procédé, caractérisé en ce pour le bombage contre la forme supérieure de bombage, le verre est à une température comprise entre 640 et 750°C.

## Patentansprüche

1. Vorrichtung zum Herstellen von gebogenem Glas, wobei das Glas eine Glasschicht oder eine Glasschichtstapelung, als Glas bezeichnet, umfasst, umfassend eine Biegestation (23), wobei die Biegestation eine massive konkave obere Biegeform (9) und eine untere Gegenform (14) zu der oberen Form, wobei die obere Biegeform über der unteren Gegenform angeordnet ist, ein Zuführmittel des Glases bis zu einem Endträger (3), der unter der oberen Biegeform angeordnet ist, umfasst, wobei der Endträger, von oben gesehen, von der unteren Gegenform umgrenzt wird, wobei der Endträger eine Aufnahmeoberfläche für das Glas bildet, auf der sich das Glas in optimaler Position zum Biegen befindet, wobei die untere Gegenform vom Rahmentyp ist und sich vertikal bewegen kann, um unter oder über die Glasaufnahmeoberfläche zu gelangen, wobei die obere Biegeform und die untere Gegenform in eine vertikale Relativbewegung zueinander versetzbar sind, die ihnen gestattet, sich aufeinander zu zu bewegen, um den Glasumfang (1) zwischen sich einzuklemmen, und sich voneinander weg zu bewegen, wobei die obere Biegeform in ihrer Fläche, die in Kontakt mit dem Glas steht, mit Öffnungen und einem Ansaugmittel versehen ist, um das Glas durch Ansaugen durch die Öffnungen hindurch gegen die Kontaktfläche zu biegen.

2. Vorrichtung nach vorstehendem Anspruch, **dadurch gekennzeichnet, dass** der Endträger ein Luftkissen umfasst.

3. Vorrichtung nach vorstehendem Anspruch, **dadurch gekennzeichnet, dass** das Zuführmittel ein Rollenbett (2) umfasst, das das Glas dem Luftkissen (3) zuführt, wobei das Glas direkt vom Rollenbett zum Luftkissen gelangen kann.

4. Vorrichtung nach Anspruch 2, **dadurch gekennzeichnet, dass** das Zuführmittel eine obere massive Transferform (42) umfasst, die mit Öffnungen in ihrer mit dem Glas in Kontakt stehenden Fläche und einem Mittel zum Ansaugen durch diese Öffnungen hindurch versehen ist, wobei die Form beweglich und geeignet ist, das Glas durch Ansaugen aus der Biegestation zu entnehmen und auf das Luftkissen (3) in der Biegestation abzusetzen.

5. Vorrichtung nach Anspruch 1, **dadurch gekennzeichnet, dass** das Zuführmittel ein Rollenbett umfasst, das auch den Endträger bildet.

6. Vorrichtung nach einem der vorstehenden Ansprüche, **dadurch gekennzeichnet, dass** die obere Biegeform mit einer Saugschürze (12) versehen ist, die in der Lage ist, das Glas anzuheben und gegen die obere Form zu halten.

7. Vorrichtung nach einem der vorstehenden Ansprüche, **dadurch gekennzeichnet, dass** ein seitlich beweglicher Kühlrahmen (50) geeignet ist, unter der oberen Biegeform angeordnet zu werden, um das von der oberen Form abgesetzte gebogene Glas aufzunehmen und von der Biegestation weg zu bewegen.

8. Vorrichtung nach einem der vorstehenden Ansprüche, **dadurch gekennzeichnet, dass** sich die Biegestation (23) in einem Ofen (20) befindet.

9. Verfahren zum Biegen einer Glasschicht oder einer Glasschichtstapelung, als Glas bezeichnet, durch die Vorrichtung nach einem der vorstehenden Ansprüche, umfassend das Positionieren des Glases in seiner optimalen Biegeposition zwischen der oberen Biegeform (9) und der unteren Gegenform (14), wobei das Glas bei einer Temperatur zur plastischen Verformung vorliegt, anschließend das Einklemmen des Glasumfangs zwischen der oberen Form und der unteren Gegenform, wobei das Biegen des Glases gegen die obere Form durch Ansaugen durch deren Fläche hindurch mindestens teilweise nach dem Einklemmen durchgeführt wird.

10. Verfahren nach vorstehendem Anspruch, **dadurch gekennzeichnet, dass** die obere Form mit einer Saugschürze (12) versehen ist, die geeignet ist, das Glas anzuheben und gegen die obere Form zu halten, und **dadurch, dass,** sobald sich das Glas in optimaler Biegeposition auf dem Endträger befindet, die Saugschürze das Glas anhebt, bis es die obere Form berührt, wobei anschließend das Einklemmen durchgeführt wird.

11. Verfahren zum Biegen von Glas durch die Vorrichtung nach Anspruch 3, wobei die obere Form mit einer Saugschürze versehen ist, die geeignet ist, das Glas anzuheben und gegen die obere Form zu halten, wobei das Verfahren das Zuführen des Glases durch das Rollenbett bis zum Luftkissen umfasst, auf dem es seine optimale Biegeposition zwischen der oberen Biegeform und der unteren Gegenform einnimmt, wobei das Glas, das bei seiner Temperatur zur plastischen Verformung vorliegt, anschließend durch die Saugschürze angehoben wird, bis es die obere Form berührt, anschließend der Glasumfang zwischen der oberen Form und der unteren Gegenform eingeklemmt wird, wobei das Biegen des Glases gegen die obere Form durch Ansaugen durch deren Fläche hindurch mindestens teilweise nach dem Einklemmen durchgeführt wird.

12. Verfahren zum Biegen von Glas durch die Vorrichtung nach Anspruch 1, umfassend das Zuführen des Glases durch das Zuführmittel, insbesondere ein Rollenbett, zum Endträger, auf dem es seine optimale Biegeposition zwischen der oberen Biegeform und der unteren Gegenform einnimmt, wobei das Glas, das bei seiner Temperatur zur plastischen Verformung vorliegt, anschließend von der unteren Gegenform angehoben wird, bis es die obere Form berührt, wobei anschließend der Glasumfang zwischen der oberen Form und der unteren Gegenform eingeklemmt wird, wobei das Biegen des Glases gegen die obere Form durch Ansaugen durch deren Fläche hindurch mindestens teilweise nach dem Einklemmen durchgeführt wird.

13. Verfahren nach einem der vorstehenden Verfahrensansprüche, **dadurch gekennzeichnet, dass** der Abstand zwischen dem Endträger und dem tiefsten Punkt der Formungsoberfläche der oberen Biegeform dauerhaft kleiner als (10 mm + Glasdicke) und sogar kleiner als (3 mm + Glasdicke) oder sogar kleiner als (1 mm + Glasdicke) bleibt.

14. Verfahren nach einem der vorstehenden Verfahrensansprüche, **dadurch gekennzeichnet, dass** nach dem Biegen ein seitlich beweglicher Kühlrahmen unter der oberen Biegeform angeordnet wird, um das von der oberen Biegeform abgesetzte gebogene Glas aufzunehmen und anschließend zum Zwecke seines Abkühlens von der Biegestation weg zu bewegen.

15. Verfahren nach einem der vorstehenden Verfahrensansprüche, **dadurch gekennzeichnet, dass** sich das Glas zwischen dem Moment, in dem es sich der oberen Biegeform zu nähern beginnt, und seinem Kontakt mit der oberen Biegeform bei einer Temperatur vorliegt, die höher als die der oberen Biegeform ist.

16. Verfahren nach vorstehendem Anspruch, **dadurch gekennzeichnet, dass** das Glas bei Kontakt mit der oberen Biegeform so abgekühlt wird, dass seine Form entsprechend jener der Kontaktfläche der oberen Biegeform erstarrt.

17. Verfahren nach einem der vorstehenden Verfahrensansprüche, **dadurch gekennzeichnet, dass** das Glas eine einzelne Schicht einer Dicke von höchstens 1,3 mm oder sogar einer Dicke von höchstens 1 mm ist.

18. Verfahren nach einem der vorstehenden Verfahrensansprüche, **dadurch gekennzeichnet, dass** das Glas zum Biegen gegen die obere Biegeform bei einer Temperatur im Bereich zwischen 640 und 750 °C vorliegt.

## Claims

1. A device for manufacturing curved glass, said glass comprising a glass sheet or a stack of glass sheets, called the glass, comprising a bending station (23), said bending station comprising a solid concave bending upper mold (9) and a lower countermold (14) that is complementary to the upper mold, the bending upper mold being placed above the lower countermold, a means for conveying the glass to a final holder (3) placed under the bending upper mold, the final holder being circumscribed, seen from above, by the lower countermold, the final holder forming a surface for receiving the glass, the glass being in an optimal bending position when on this surface, the lower countermold being of the frame type and being able to move vertically in order to pass below or above the surface for receiving the glass, the bending upper mold and the lower countermold being able to move with a relative vertical movement that allows them to be brought together, in order to clamp therebetween the periphery of the glass (1), and to move apart from each other, the bending upper mold being equipped with orifices in its face that makes contact with the glass and a means for applying suction in order to curve the glass against this contact face via suction applied through said orifices.

2. The device as claimed in the preceding claim, **characterized in that** the final holder comprises an air cushion.

3. The device as claimed in the preceding claim, **characterized in that** the conveying means comprises a roller bed (2) that conveys the glass to the air cushion (3), the glass being able to pass directly from the roller bed to the air cushion.

4. The device as claimed in claim 2, **characterized in that** the conveying means comprises a solid upper pick-up (42) equipped with orifices in its face that makes contact with the glass and a means for applying suction through these orifices, said mold being moveable and able to pick up the glass via suction outside of the bending station and to drop it onto the air cushion (3) in the bending station.

5. The device as claimed in claim 1, **characterized in that** the conveying means comprises a roller bed also forming the final holder.

6. The device as claimed in one of the preceding claims, **characterized in that** the bending upper mold is equipped with a vacuum skirt (12) that is able to lift the glass and hold it against the upper mold.

7. The device as claimed in one of the preceding claims, **characterized in that** a laterally moveable cooling frame (50) is able to be placed under the bending upper mold in order to collect the curved glass dropped by the upper mold and to retract it from the bending station.

8. The device as claimed in one of the preceding claims, **characterized in that** the bending station (23) is in an oven (20).

9. A process for bending a glass sheet or a stack of glass sheets, called the glass, with the device of one of the preceding claims, comprising placing the glass in its optimal bending position between the bending upper mold (9) and the lower countermold (14), the glass then being at a plastic-deformation temperature, then clamping the periphery of the glass between the upper mold and the lower countermold, the glass being bent against the upper mold via suction applied through a face thereof, at least partially after the clamping.

10. The process as claimed in the preceding claim, **characterized in that** the upper mold is equipped with a vacuum skirt (12) that is able to lift the glass and hold it against the upper mold, and **in that** after the glass has reached its optimal bending position on the final holder, the vacuum skirt lifts the glass until it makes contact with the upper mold, the clamping then being carried out.

11. A process for bending glass with the device of claim 3, the upper mold being equipped with a vacuum skirt that is able to lift the glass and hold it against the upper mold, said process comprising conveying the glass, via the roller bed, to the air cushion, on which the glass attains its optimal bending position between the bending upper mold and the lower countermold, then, the glass being at its plastic-deformation temperature, lifting the glass via the vacuum skirt until it makes contact with the upper mold, the periphery of the glass then being clamped between the upper mold and the lower countermold, the glass being bent against the upper mold via suction applied through a face thereof, at least partially after the clamping.

12. A process for bending glass with the device of claim 1, comprising conveying the glass, via the conveying means, in particular a roller bed, to the final holder, on which the glass attains its optimal bending position between the bending upper mold and the lower countermold, then, the glass being at its plastic-deformation temperature, lifting the glass via the lower countermold until it makes contact with the upper mold, the periphery of the glass then being clamped between the upper mold and the lower countermold, the glass being bent against the upper mold via suction applied through a face thereof, at least partially after the clamping.

13. The process as claimed in one of the preceding process claims, **characterized in that** the distance between the final holder and the lowest point of the molding surface of the bending upper mold is always less than (10 mm + the thickness of the glass) and even less than (3 mm + the thickness of the glass) or indeed less than (1 mm + the thickness of the glass).

14. The process as claimed in one of the preceding process claims, **characterized in that** after bending, a laterally moveable cooling frame is placed under the bending upper mold in order to collect the curved glass dropped by the bending upper mold then to retract it from the bending station with a view to cooling it.

15. The process as claimed in one of the preceding process claims, **characterized in that** between the moment at which the glass starts to move closer to the bending upper mold and its contact with the bending upper mold, the glass is at a temperature above that of the bending upper mold.

16. The process as claimed in the preceding claim, **characterized in that** the glass is cooled in contact with the bending upper mold so as to set its shape to that of the contact fact of the bending upper mold.

17. The process as claimed in one of the preceding process claims, **characterized in that** the glass is an individual sheet of at most 1.3 mm thickness, or even of at most 1 mm thickness.

18. The process as claimed in one of the preceding process claims, **characterized in that** the glass is at a temperature comprised between 640 and 750°C for the bending against the bending upper mold.
